# EUROPÄISCHE PATENTANMELDUNG

(11) **EP 1 179 963 A2**
(43) Veröffentlichungstag der Anmeldung: **13.02.2002**
(21) Anmeldenummer: 01114040.7
(22) Anmeldetag: 08.06.2001
(51) Int. Cl.: H04Q 11/00

(54) **Steuerbares optisches Schaltmodul**

(30) Priorität: 09.08.2000 DE 10038951
(71) Anmelder: SIEMENS AKTIENGESELLSCHAFT, 80333 München (DE)
(72) Erfinder: Jäger, Huber, Dr., VA 22101 McLean (US); Jahreis, Oliver, 80687 München (DE); Monitzer, Arnold, VA 20190 Reston (US)

(57) **Zusammenfassung**

Das steuerbare optische Schaltmodul (OSM) weist mindestens N optische Eingängen (il bis iN) und mindestens N optische Ausgänge (e1 bis eN) zum wahlweisen Durchschalten von optischen Signalen (osl bis osN) auf, wobei jeweils ein optisches Signal (osl bis osN) mit Hilfe einer Steuereinheit (CU) von einem optischen Eingang (il bis iN) über jeweils einen Schaltpunkt (SP) einer Schaltmatrix (SM) an einen optischen Ausgang (e1 bis eN) durchschaltbar ist. Die Reihenfolge der Anordnung der optischen Eingänge (il bis iN) ist dadurch bestimmt, daß die jeweils beim Durchschalten der optischen Signale (osl bis osN) von einem optischen Eingang (il bis iN) über einen Schaltpunkt (SP) zu einem optischen Ausgang (e1 bis eN) hervorgerufene Dämpfung (A1 bis AN) von dem ersten bis zum N-ten optischen Eingang (il bis iN) ansteigt oder abnimmt.

## Beschreibung

Die Erfindung betrifft ein steuerbares optisches Schaltmodul mit mindestens N optischen Eingängen und mindestens N optischen Ausgängen zum wahlweisen Durchschalten von optischen Signalen, wobei jeweils ein optisches Signal mit Hilfe einer Steuereinheit von einem optischen Eingang über jeweils einen Schaltpunkt einer Schaltmatrix an einen optischen Ausgang durchschaltbar ist.

Optische Übertragungsnetze auf der Basis hochbitratiger, fasergebundener Übertragungsstrecken mit optischen Crossconnects und gegebenenfalls auch mit optischen Frequenzmultiplex stellen das zukünftige Transportnetz zur Übertragung hoher Datenmengen für die zukünftige Telekommunikation dar.

Das zu erwartende Wachstum im Bereich der Datenübertragung über optische Übertragungsnetze, insbesondere durch die Zunahme an Internetzugangsanbietern und Internetbenutzern, macht es erforderlich, derartige optische Übertragungsnetze möglichst zuverlässig auszugestalten, d.h. die Zuverlässigkeit eines optischen Crossconnects hinsichtlich dem Durchschalten von Verbindungen von unterschiedlichen Benutzern mit unterschiedlichsten Verbindungsanforderungen muß äußerst sicher, flexibel und innerhalb kürzester Zeit mit einem angemessenen technischen Aufwand realisierbar sein.

Hierbei werden bei den als faseroptische Verteiler ausgestalteten optischen Crossconnects optische Verbindungen derart realisiert, daß in den jeweiligen optischen Crossconnects manuell optische Verbindungen beispielsweise durch eine optische Steckverbindung durchgeschaltet werden. Hierzu werden üblicherweise zwei jeweils einen Steckeranschluß aufweisende, optische Leiter über eine derartige optische Steckerverbindung miteinander verbunden, wobei die optische Steckerverbindung einen optischen Verbindungsleiter und zwei jeweils an den Enden des optischen Verbindungsleiters angebrachte Stecker aufweist. Die Stecker des optischen Verbindungsleiters werden in die optischen Anschlüsse der zu verbindenden optischen Leiter gesteckt und letztendlich dadurch eine optische Verbindung zwischen einem ersten optischen Leiter bzw. eine Zuleitungsfaser und einem zweiten optischen Leiter bzw. eine Ableitungsfaser erstellt.

Zum Erstellen von dynamischen optischen Verbindungen, d.h. optische Verbindungen die beispielsweise innerhalb eines Tages mehrfach umkonfiguriert werden, sind steuerbare optische Crossconnects bzw. Schaltmodule bekannt - siehe hierzu insbesondere die Homepage der Firma OMM http://www.omminc.com/products/2dmems.htm , deren steuerbare optische Schaltmodule mit Hilfe von optischen Schaltern bzw. steuerbaren optischen Spiegeln realisierte Koppel- bzw. Schaltmatrizen aufweisen. Hiermit können optische Verbindungen über ein Netzmanagementsystem elektronisch geschaltet werden, wodurch das oft zeitintensive händische "Stecken" einer optischen Verbindung entfällt. Nachteilig ist jedoch, daß ein Ausbau, d.h. eine Erhöhung der optischen Schnittstellen des optischen automatisch steuerbaren Crossconnects bzw. Schaltmoduls, nur durch einen unverhältnismäßig gesteigerten gerätetechnischen Aufwand realisierbar wird. Wird beispielsweise eine Verdopplung der Anzahl der optischen Schnittstellen eines steuerbaren optischen Crossconnects angestrebt, so muß, um eine Mindest-Blockierungsfreiheit des steuerbaren Schaltmoduls zu gewährleisten, eine Kaskadierung von optischen Schaltmodulen der Schaltmatrix durchgeführt werden. Ein solche Kaskadierung zur Verdopplung der optischen Schnittstellen kann unter Umständen - abhängig von der geforderten Blockierungsfreiheit des steuerbaren Schaltmoduls - zu mehr als einer Vervierfachung der optischen Schaltmodule führen.

Zusätzlich wird durch die Kaskadierung von optischen Schaltmodulen die Durchlaßdämpfung des optischen Crossconnects erhöht, so daß eine zusätzliche Regeneration des über den optischen Crossconnect bzw. die Kaskade von steuerbaren Schaltmodulen übermittelten optischen Signals erforderlich werden kann. Ein weiterer Nachteil ist insbesondere darin zu sehen, daß die einzelnen Schaltpfade von einem optischen Eingang über einen Schaltpunkt zu einem optischen Ausgang eines derartigen steuerbaren optischen Schaltmoduls stark unterschiedliche Dämpfungen bzw. Durchlaßdämpfungen aufweisen, welche bei größeren steuerbaren optischen Schaltmodulen bzw. Schaltmatrizen (16*16 oder 32*32 Ein/Ausgänge) im Bereich von 4 bis 10 dB liegen können. Durch derartig hohe Dämpfungswerte werden die optischen Signale, welche über eine beispielsweise dreistufige, mit derartigen steuerbaren optischen Schaltmodulen aufgebaute Koppelanordnung (Klos-Struktur) übertragen werden, derartig stark gedämpft, daß das am Ausgang der Koppelanordnung anliegende optische Signal nicht mehr rekonstruierbar ist bzw. nicht mehr weiterverarbeitet werden kann. Diese aufgrund von Fertigungstoleranzen hervorgerufen, insbesondere bei großen Schaltmatrix hohen Dämpfungswerte einzelner Schaltpfade bzw. Schaltpunkte innerhalb eines steuerbaren optischen Schaltmoduls verringern erheblich die Zuverlässigkeit des steuerbaren Schaltmoduls an sich sowie der gesamten Koppelanordnung bzw. des optischen Crossconnects.

Die Aufgabe der vorliegenden Erfindung besteht darin, die Zuverlässigkeit eines steuerbaren optischen Schaltmoduls hinsichtlich der beim Durchschalten eines optischen Signales von einem optischen Eingang über einen Schaltpunkt zu einem optischen Ausgang hervorgerufenen Dämpfung zu verbessern. Die Aufgabe wird ausgehend von einem steuerbaren optischen Schaltmodul gemäß den Merkmalen des Oberbegriffs des Patentanspruches 1 durch dessen kennzeichnende Merkmale gelöst.

Der wesentliche Aspekt des erfindungsgemäßen steuerbaren optischen Schaltmoduls ist darin zu sehen, daß die Reihenfolge der Anordnung der optischen Eingänge dadurch bestimmt ist, daß die jeweils beim Durchschalten der optischen Signale von einem optischen Eingang über einen Schaltpunkt zu einem optischen Ausgang hervorgerufene Dämpfung von dem ersten bis zum N-ten optischen Eingang ansteigt oder abnimmt. Vorteilhaft werden die Dämpfungswerte der durch die Schaltmatrix schaltbaren Verbindungspfade ermittelt und anhand der ermittelten Dämpfungswerte die Reihenfolge der optischen Eingänge des steuerbaren optischen Schaltmoduls an die ermittelten Dämpfungswerte angepaßt. So können beispielsweise Dämpfungswerte der ersten N optischen Eingänge vom ersten bis zum N-ten optischen Eingang zunehmen oder abnehmen, wobei unter der Reihenfolge jede beliebige Reihenfolge der Anordnung der optischen Eingänge bzw. optischen Anschlußpunkten des steuerbaren optischen Schaltmoduls zu verstehen ist. Hierdurch werden besonders vorteilhaft vorzugsweise die an einen einen geringen Dämpfungswert aufweisenden, von einem Eingang über einen Schaltpunkt zu einem Ausgang verlaufenden Verbindungspfad angeschlossenen optischen Eingänge in der Reihenfolge angeordnet, daß diese für die Übermittlung von optischen Signalen bevorzugt beschaltet werden, wobei die weiteren, höhere Dämpfungswerte aufweisenden optischen Eingänge für die Vermittlung nur beschränkt eingesetzt werden bzw. niederprioritäre optische Signale an diese optischen Eingänge geführt werden. Mit Hilfe des erfindungsgemäßen steuerbaren optischen Schaltmoduls kann die Zuverlässigkeit von bereits bestehenden optischen Crossconnects bzw. Koppelfeldanordnungen bei einer Steigerung der Schaltmatrizen von N=16 oder N=32 wesentlich erhöht werden und zusätzlich die bereits bestehende Hardware und Software der optischen Crossconnects bzw. Koppelfeldanordnungen im wesentlichen weiterbenutzt werden.

Erfindungsgemäß ist die Reihenfolge der Anordnung der optischen Ausgänge durch die Reihenfolge der an die optischen Ausgänge über jeweils einen Schaltpunkt angeschlossenen optischen Eingänge bestimmt - Anspruch 2. Vorteilhaft wird durch die neue Anordung der optischen Ausgänge hinsichtlich der optischen Eingänge ein zwar von der Anschlußzahl reduziertes steuerbares optischen Schaltmodul, beispielsweise 8*16 oder 8*14, realisiert, wobei jedoch die Zuverlässigkeit des eine reduzierte Anschlußzahl aufweisenden steuerbaren optischen Schaltmoduls wesentlich erhöht wurde. Bei den zur Verfügung stehenden Schaltverbindungen des reduzierten steuerbaren optischen Schaltmoduls kann ein Verlust bzw. eine zu hohe Dämpfung des durchzuschaltenden optischen Signals nahezu nicht auftreten.

Gemäß einer weiteren Ausgestaltung des steuerbaren optischen Schaltmoduls ist mindestens eine Anpassungseinheit zur Anpassung der optischen Schalteingänge und der optischen Schaltausgänge der Schaltmatrix des optischen steuerbaren Schaltmoduls an die durch die Dämpfung festgelegte Reihenfolge der Anordnung der optischen Eingänge und der optischen Ausgänge vorgesehen - Anspruch 3. Vorteilhaft wird durch die mindestens eine Anpassungseinheit die einzelnen optischen Schalteingänge bzw. -ausgänge der Schaltmatrix gemäß ihrer Dämpfungswerte mit der Anordnung der optischen Ein- und Ausgänge des steuerbaren optischen Schaltmoduls verbunden. Hierdurch werden die durch die Fertigung festgelegten optischen Schalteingänge und -ausgänge der optischen Schaltmatrix mit unterschiedlichen optische Ein- und Ausgänge des steuerbaren optischen Schaltmoduls verbunden, welche nicht mehr in der Reihenfolge der ursprünglichen optischen Schalteingänge und -ausgänge angeordnet sind.

Vorteilhafte Weiterbildungen und Ausbildungen des erfindungsgemäßen steuerbaren optischen Schaltmoduls, insbesondere ein optischer Crossconnect sind in den weiteren Patentansprüchen beschrieben.

Die Erfindung soll im folgenden anhand von zwei Prinzipschaltbildern näher erläutert werden.
- Figur 1: zeigt den prinzipiellen Aufbau des erfindungsgemäßen steuerbaren optischen Schaltmoduls und
- Figur 2: zeigt eine Erweiterung des optischen Crossconnects um ein zweites steuerbares Schaltmodul.

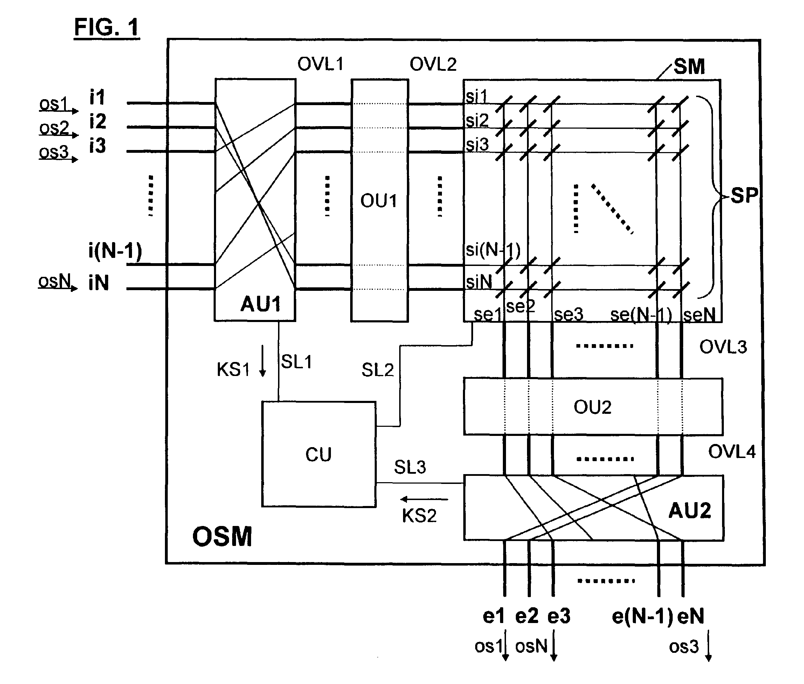

In Figur 1 ist beispielhaft der prinzipielle Aufbau des erfindungsgemäßen steuerbaren optischen Schaltmoduls OSM dargestellt, welches ein bis N-te optische Eingänge i1 bis iN, ein bis N-te optische Ausgänge e1 bis eN, eine erste und zweite optische Anpassungseinheit AU1,AU2, eine erste und zweite Optikeinheit OU1,OU2, eine optische Schaltmatrixeinheit SM mit mehreren optischen Schaltpunkten SP und eine Steuereinheit CU aufweist.

Die ein bis N-ten optischen Eingänge i1 bis iN sind an die ersten Anpassungseinheit AU1 angeschlossen, welche über erste optische Verbindungsleitungen OVL1 mit der ersten Optikeinheit OU1 verbunden ist. Desweiteren ist die erste Anpassungseinheit AU1 über eine erste Steuerleitung SL1 an die Steuereinheit SU angeschlossen und die erste Optikeinheit OU1 ist zusätzlich über zweite optische Verbindungsleitungen OVL2 an die ersten bis N-ten optischen Schalteingänge si1 bis siN der optischen Schaltmatrixeinheit SM angeschlossen ist. Die ein bis N-ten optischen Schalteingänge si1 bis siN sind jeweils über einen optischen Schaltpunkt SP, beispielsweise einen steuerbaren optischen Spiegel, mit jedem ein bis N-ten Schaltausgang se1 bis seN der optischen Schaltmatrixeinheit SM verbindbar, wobei in Figur 1 aus Gründen der Übersichtlichkeit jeweils nur ein Teil der möglichen optischen Schaltpunkte SP und der schaltbaren Verbindungen dargestellt ist. Die optische Schaltmatrixeinheit SM ist über eine zweite Steuerleitung SL2 mit der Steuereinheit CU verbunden. Die ein bis N-ten optischen Schaltausgänge se1 bis seN sind über dritte optische Verbindungsleitungen OVL3 an die zweite Optikeinheit OU2 angeschlossen, welche über vierte optische Verbindungsleitungen OVL4 mit der zweiten Anpassungseinheit AU2 verbunden ist. Zusätzlich ist die zweite Anpassungseinheit AU2 über eine dritte Steuerleitung SL3 mit der Steuereinheit CU verbunden sowie an die ein bis N-ten optischen Ausgänge e1 bis eN des steuerbaren optischen Schaltmoduls OSM angeschlossen.

Erfindungsgemäß wird mit Hilfe der ersten Anpassungseinheit AU die Reihenfolge der Anordnung der ersten bis N-ten optischen Eingänge i1 -bis iN dadurch bestimmt, daß die jeweils beim Durchschalten von optischen Signal os1 bis osN von einem optischen Eingang i1 bis iN über einen optischen Schaltpunkt SP zu einem optischen Ausgang e1 bis eN hervorgerufene Dämpfung A1 bis AN von dem ersten bis zum N-ten optischen Eingang i1 bis iN ansteigt oder abnimmt. In Figur 1 weist beispielsweise der erste optische Eingang i1 die geringste Dämpfung bzw. erste Dämpfung A1 auf und die zweite bis N-te Dämpfung A2 bis AN des zweiten bis N-ten optischen Eingänge i2 bis iN nimmt mit der Anordnungsreihenfolge der ersten bis N-ten optischen Eingänge i1 bis iN zu, d.h. die erste bis N-te Dämpfung A1 bis AN steigt mit der Anschlußnummer der optischen Eingänge i1 bis in an [A1 < A2 < A3 < ... < A(N-1) < AN ]. Somit weisen beispielsweise die ersten drei optischen Eingänge i1 bis i3 die geringsten drei mit Hilfe der optischen Schaltmatrixeinheit SM realisierbaren Dämpfungswerte A1 bis A3 auf, welche beispielsweise im Bereich von 1 bis 3 dB liegen können.

Hierzu werden die ersten, beispielsweise parallel zu den ersten bis N-ten optischen Schalteingängen si1 bis siN verlaufenden optischen Verbindungsleitungen OVL1 mit Hilfe der ersten Anpassungseinheit AU1 gemäß ihrer Dämpfungswerte A1 bis AN an die erfindungsgemäße Anordnung der ersten bis N-ten optischen Eingänge i1 bis iN angepaßt bzw. angeschaltet.

Analog hierzu werden die vierten, beispielsweise parallel zu den ersten bis N-ten optischen Schaltausgängen se1 bis seN verlaufenden optischen Verbindungsleitungen OVL4 mit Hilfe der zweiten Anpassungseinheit AU2 gemäß ihrer Dämpfungswerte A1 bis AN an die erfindungsgemäße Anordnung der ersten bis N-ten optischen Ausgänge e1 bis eN angepaßt bzw. angeschaltet.

Hierdurch können die die geringste Dämpfung aufweisenden und somit zuverlässigsten Schaltpfade, beispielsweise von ersten optischen Eingang über einen Schaltpunkt SP zum N-ten optischen Ausgang EN, gezielt als beispielsweise erste bis dritte optische Eingänge i1 bis i3 und als erste bis dritte optische Ausgänge angeordnet werden, d.h. das hierdurch entstehende, hinsichtlich der Anschlußzahl reduzierte sowie nur die vzuverlässigsten Schaltpunkte SP der optischen Schaltmatrixeinheit SM benutzende steuerbare optische Schaltmodul OSM kann zum zuverlässigen wahlweisen Durchschalten von optischen Signalen os1 bis osN eingesetzt werden.

Die mit Hilfe der ersten und zweiten Anpassungseinheit AU1 bis AU2 festgelegte Reihenfolge der Anordnung der ersten bis N-ten optischen Eingänge i1 bis iN und der ersten bis N-ten optischen Ausgänge e1 bis eN hinsichtlich der ersten bis N-ten optischen Schalteingänge si1 bis siN und der ersten bis N-ten optischen Schaltausgänge se1 bis seN wird der Steuereinheit CU mit Hilfe von einem ersten und zweiten Konfigurationssignals KS1, KS2 übermittelt, d.h. der Steuereinheit CU wird mitgeteilt welcher der ein bis N-ten optischen Ein- und Ausgänge i1 bis iN, e1 bis eN mit welchem ein bis N-ten optischen Schalteingang und -ausgang si1 bis siN, se1 bis seN verbunden ist.

Somit werden die ein bis N-ten optischen Eingänge i1 bis iN geführten, ersten bis N-ten optischen Signale os1 bis osN über die erste Anpassungseinheit AU1 und über die erste Optikeinheit OU1 an den ersten bis N-ten Schalteingang si1 bis siN der optischen Schaltmatrixeinheit SM übertragen, wobei die erste Optikeinheit OU1 zum Einkoppeln des ersten bis N-ten optischen Signals os1 bis osN in die optische Schaltmatrixeinheit SM vorgesehen ist.

Die ersten bis N-ten optischen Signale os1 bis osN werden mit Hilfe der optischen Schaltmatrixeinheit SM auf den jeweiligen ein bis N-ten optischen Schalteingang se1 bis seN durchgeschaltet und über die dritten optischen Verbindungsleitungen an die zweite Optikeinheit OU2 übertragen, welche zum Auskoppeln des durchgeschalteten ersten bis N-ten optischen Signals os1 bis osN aus der optische Schaltmatrixeinheit SM vorgesehen ist.

Von der zweiten Optikeinheit OU2 werden das durchgeschaltete erste bis N-te optische Signal os1 bis osN über die vierten optischen Verbindungsleitungen an die zweite Anpassungseinheit Au2 übertragen, mit deren Hilfe das erste bis N-te optische Signal os1 bis osN an den jeweiligen zugeordneten ersten bis N-ten optischen Ausgang e1 bis eN angepaßt bzw. durchgeschaltet werden.

Die zweite Anpassungseinheit AU2 ist optional und kann auch gemäß der Erfindung entfallen.

Desweiteren kann gegebenenfalls eine Kaskadierung - in Figur 1 nicht dargestellt - von den erfindungsgemäßen steuerbaren optischen Schaltmodulen OSM vorgenommen werden, um beispielsweise einen blockierungsfreien optischen Crossconnect aufzubauen.

Ein derartiger optischer Crossconnect weist mindestens eine erste, zweite und dritte, jeweils aus mehreren parallel geschalteten erfindungsgemäßen steuerbaren optischen Schaltmodulen OSM aufgebaute Koppelstufen auf. Hierbei sind die erste, zweite und dritte Koppelstufe aus den erfindungsgemäßen steuerbaren optischen Schaltmodulen OSM mit 2*N optischen Eingängen i1 bis i2N und 2*N optischen Ausgängen e1 bis e2N aufgbaut, wobei in der ersten und dritten Koppelstufe N und in der zweiten Koppelstufe 2*N steuerbare optische Schaltmodule OSM parallel geschaltet sind. Desweiteren sind jeweils an die ersten N, die geringsten Dämpfungswerte A1 bis AN aufweisenden optischen Eingänge i1 bis iN der in der ersten Koppelstufe angeordneten N steuerbaren optischen Schaltmodule OSM optische Zuleitungsfasern angeschlossen. Zusätzlich ist jeweils ein optischer Ausgang eines in der ersten Koppelstufe angeordneten steuerbaren optischen Schaltmodules OSM mit genau einem optischen Eingang eines in der zweiten Koppelstufe angeordneten 2*N steuerbaren optischen Schaltmoduls OSM verbunden. Analog hierzu ist jeweils ein optischer Eingang eines in der dritten Koppelstufe angeordneten steuerbaren optischen Schaltmodules OSM mit genau einem optischen Ausgang eines in der zweiten Koppelstufe angeordneten 2*N steuerbaren optischen Schaltmoduls OSM verbunden. Desweiteren sind jeweils an die ersten N, die geringsten Dämpfungswerte A1 bis AN aufweisenden Ausgänge der in der dritten Koppelstufe angeordneten N steuerbaren optischen Schaltmodule OSM optische Ableitungsfasern angeschlossen.

Die dargestellte Struktur des optischen Crossconnects stellt nur eine von einer Vielzahl von Koppelfeldanordnungen dar, welche mit Hilfe des erfindungsgemäßen steuerbaren optischen Schaltmoduls OSM realisiert sein können.

## Patentansprüche

1. Steuerbares optisches Schaltmodul (OSM) mit mindestens N optischen Eingängen (i1 bis iN) und mindestens N optischen Ausgängen (e1 bis eN) zum wahlweisen Durchschalten von optischen Signalen (os1 bis osN), wobei jeweils ein optisches Signal (os1 bis osN) mit Hilfe einer Steuereinheit (CU) von einem optischen Eingang (i1 bis iN) über jeweils einen Schaltpunkt (SP) einer Schaltmatrix (SM) an einen optischen Ausgang (e1 bis eN) durchschaltbar ist,
**dadurch gekennzeichnet,**
**daß** die Reihenfolge der Anordnung der optischen Eingänge (i1 bis iN) dadurch bestimmt ist, daß die jeweils beim Durchschalten der optischen Signale (os1 bis osN) von einem optischen Eingang (i1 bis iN) über einen Schaltpunkt (SP) zu einem optischen Ausgang (e1 bis eN) hervorgerufene Dämpfung (A1 bis A2) von dem ersten bis zum N-ten optischen Eingang (i1 bis iN) ansteigt oder abnimmt.

2. Steuerbares optisches Schaltmodul nach Anspruch 1,
**dadurch gekennzeichnet,**
**daß** die Reihenfolge der Anordnung der optischen Ausgänge (e1 bis eN) durch die Reihenfolge der an die optischen Ausgänge (e1 bis eN) über jeweils einen Schaltpunkt (SP) angeschlossenen optischen Eingänge (i1 bis iN) bestimmt ist.

3. Steuerbares optisches Schaltmodul nach Anspruch 1 oder 2,
**dadurch gekennzeichnet,**
**daß** mindestens eine Anpassungseinheit (AU1, Au2) zur Anpassung der optischen Schalteingänge (si1 bis si2) und/oder der optischen Schaltausgänge (se1 bis seN) der Schaltmatrix (SM) des optischen steuerbaren Schaltmoduls (OSM) an die durch die Dämpfung (A1 bis AN) festgelegte Reihenfolge der Anordnung der optischen Eingänge (i1 bis iN) und der optischen Ausgänge (e1 bis eN) vorgesehen ist.

4. Steuerbares optisches Schaltmodul nach einem der Ansprüche 1 bis 3,
**dadurch gekennzeichnet,**
**daß** bei ansteigender Dämpfung (A1 < A2 < ... < AN) ein die geringste Dämpfung (A1) aufweisender Verbindungspfad den ersten optischen Eingang (i1) und/oder den ersten optischen Ausgang (e1) beinhaltet und
**daß** bei abnehmender Dämpfung (A1 > A2 > ... > AN) ein die größte Dämpfung (A1) aufweisender Verbindungspfad den ersten optischen Eingang (i1) und/oder den ersten optischen Ausgang (e1) beinhaltet.

5. Steuerbares optisches Schaltmodul nach einem der Ansprüche 1 bis 3,
**dadurch gekennzeichnet,**
**daß** bei ansteigender Dämpfung (A1 < A2 < ... < AN) ein die größte Dämpfung (AN) aufweisender Verbindungspfad den N-ten optischen Eingang (iN) und/oder den N-ten optischen Ausgang (eN) beinhaltet und
**daß** bei abnehmender Dämpfung (A1 > A2 > ... > AN) ein die geringste Dämpfung (AN) aufweisender Verbindungspfad den N-ten optischen Eingang (iN) und den N-ten optischen Ausgang (eN) beinhaltet.

6. Steuerbares optisches Schaltmodul nach einem der Ansprüche 3 bis 5,
**dadurch gekennzeichnet,**
**daß** beim Durchschalten von optischen Signalen (os1 bis osN) in der Steuereinheit (CU) die mit Hilfe der mindestens einen Anpassungseinheit (AU1, AU2) festgelegte Reihenfolge der Anordnung der optischen Eingänge (i1 bis iN) und der optischen Ausgänge (e1 bis eN) berücksichtigt wird.

7. Optischer Crossconnect mit mindestens einer ersten, zweiten und dritten, jeweils aus mehreren parallel geschalteten steuerbaren optischen Schaltmodulen (OSM) gemäß Anspruch 1 aufgebauten Koppelstufe,
**dadurch gekennzeichnet,**
**daß** die erste, zweite und dritte Koppelstufe steuerbare optische Schaltmodule (OSM) mit 2*N Eingängen (i1 bis i2N) und 2*N Ausgängen (e1 bis e2N) aufweist, wobei in der ersten und dritten Koppelstufe N und in der zweiten Koppelstufe 2*N steuerbare optische Schaltmodule (OSM) parallel geschaltet sind,
**daß** jeweils an die ersten N, die geringsten Dämpfungswerte aufweisenden Eingänge (i1 bis iN) der in der ersten Koppelstufe angeordneten N steuerbaren optischen Schaltmodule (OSM) optische Zuleitungsfasern angeschlossen sind,
**daß** jeweils ein Ausgang (e1 bis e2N) eines in der ersten Koppelstufe angeordneten steuerbaren optischen Schaltmodules (OSM) mit genau einem Eingang (i1 bis i2N) eines in der zweiten Koppelstufe angeordneten 2*N steuerbaren optischen Schaltmoduls (OSM) verbunden ist,
**daß** jeweils ein Eingang (i1 bis i2N) eines in der dritten Koppelstufe angeordneten steuerbaren optischen Schaltmodules (OSM) mit genau einem Ausgang (e1 bis e2N) eines in der zweiten Koppelstufe angeordneten 2*N steuerbaren optischen Schaltmoduls (OSM) verbunden ist,
**daß** jeweils an die ersten N, die geringsten Dämpfungswerte aufweisende Ausgänge (e1 bis eN) der in der dritten Koppelstufe angeordneten N steuerbaren optischen Schaltmodule (OSM) optische Ableitungsfasern angeschlossen sind.
